# EUROPÄISCHE PATENTANMELDUNG

(11) **EP 1 243 536 A1**
(43) Veröffentlichungstag der Anmeldung: **25.09.2002**
(21) Anmeldenummer: 01126492.6
(22) Anmeldetag: 12.11.2001
(51) Int. Cl.: B65G 69/04, B65G 19/24

(54) **Fördereinrichtung für Schüttgut**

(30) Priorität: 20.03.2001 DE 10113544
(71) Anmelder: Schwäbische Hüttenwerke GmbH, 73433 Aalen-Wasseralfingen (DE)
(72) Erfinder: Schröder, Klaus-Sweerich, 73431 Aalen (DE); Knaus, Andreas, 73457 Essingen (DE)
(74) Vertreter: Schwabe - Sandmair - Marx

(57) **Zusammenfassung**

Die Anmeldung betrifft eine Fördereinrichtung für Schüttgut, umfassend: ein in eine Förderrichtung (F2) antreibbares Zugmittel (6), mit dem Zugmittel (6) verbundene, in Förderrichtung (2) hintereinander angeordnete Tragglieder (9), Mitnehmerelemente (10), die mit den Traggliedern (9) verbunden sind und für einen rechenartigen Eingriff in das Schüttgut über die Tragglieder (9) hinausragen, und wenigstens eines der Mitnehmerelemente (10) von dem Tragglied (9), mit dem es verbunden ist, in Förderrichtung (F2) zu einer Scherkante (11) des Mitnehmerelements (10) mit einer Neigung (α) vorragt.

## Beschreibung

Die Erfindung betrifft eine Fördereinrichtung für Schüttgut, die in der Art eines Rechens vorzugsweise von oben in das Schüttgut eingreift. Die Fördereinrichtung kann insbesondere in einem Schüttgutbunker eingesetzt werden, um das Schüttgut homogen und gleichförmig zu verteilen, vorzugsweise zum Zwecke der Befüllung des Bunkers mit dem Schüttgut.

Im Schüttguthandling besteht der Wunsch nach einer Homogenisierung und Vergleichmäßigung des Schüttguts. Im Besonderen besteht der Wunsch bei länglichen oder flächigen Schüttgütern. Die Homogenisierung und Vergleichmäßigung ist vorteilhaft für eine kontinuierliche Förderung und für eine Lagerung des Schüttguts, insbesondere wenn für die Lagerung nur ein begrenzter Raum zur Verfügung steht, beispielsweise in Schüttgutbunkern und insbesondere in Flachbunkern, einer für die Lagerung von flächigen und/oder länglichen Schüttgütern bevorzugten Bunkerart. So wird zur Erzielung einer homogenen Schüttgutfüllung in Flachbunkern ein Ziehförderer über dem Schüttgut angeordnet, der von oben in der Art eines Rechens in das Schüttgut eingreift, das auf einem Förderband aufliegend kontinuierlich bis beispielsweise gegen eine Bunkerwand gefördert und dadurch vor der Bunkerwand zu einem Schüttgutkegel angehäuft wird. Der Ziehförderer fördert ebenfalls kontinuierlich durch den rechenartigen Eingriff das Schüttgut entgegen der Förderrichtung des Förderbands.

Bekannte Ziehförderer weisen eine Mehrzahl von hintereinander an einem Zugmittel befestigte Tragglieder mit je mehreren stabförmigen Mitnehmerelementen auf. Jedes der Tragglieder bildet mit seinen mehreren Mitnehmerelementen einen Rechen. Der Rechen hat die Aufgabe, das Schüttgut schonend über den bereits vorhandenen Schüttgutberg zu transportieren. Als Zugmittel für die Rechen dienen im Allgemeinen Ketten, beispielsweise Doppelstränge von Buchsenlaschenketten.

Die Zugmittel werden stark strapaziert, insbesondere bei großer Länge des Bunkers. Eine Ursache dafür liegt in dem hohen Reibungswiderstand zwischen den Spitzen der Mitnehmerelemente und dem darunter liegenden Schüttgutberg. Da die Mitnehmerelemente relativ lang sind, beispielsweise 400 mm lang, und daher der Hebelarm zwischen der Unterkante des einzelnen Mitnehmerelements, welche eine Scherkante bildet, und dem Tragglied, mit dem das betreffende Mitnehmerelement verbunden ist, relativ groß ist, beispielsweise 200 mm, wird ein hohes Drehmoment in dem Tragglied erzeugt. Das Drehmoment wird von dem Tragglied auf das Zugmittel übertragen. Die Tragglieder sind an kurzen Kettengliedern, die im Allgemeinen zwischen 100 und 200 mm lang sind, befestigt. Infolge der von den Traggliedern ausgeübten Drehmomente werden diese Kettenglieder relativ zu ihren jeweiligen Nachbarkettengliedern verdreht, so dass es zu Verklemmungen und hohem Verschleiß der Kette kommt.

Es ist eine Aufgabe der Erfindung, bei einer in der Art eines Rechens in ein Schüttgut eingreifenden Fördereinrichtung die Förderkontinuität zu verbessern und den Verschleiß zu mindern.

Eine Fördereinrichtung für Schüttgut, wie die Erfindung sie betrifft, umfasst ein Zugmittel, mehrere Tragglieder und pro Tragglied wenigstens ein Mitnehmerelement, vorzugsweise mehrere Mitnehmerelemente pro Tragglied. Das Zugmittel wird im Einsatz motorisch angetrieben. Es läuft vorzugsweise endlos um entsprechende Umlenkelemente um, obgleich grundsätzlich auch eine Hin- und Herbewegung des Zugmittels denkbar ist. Das Zugmittel ist vorzugsweise ein Gliederförderer, besonders bevorzugt ein Kettenförderer. Es kann grundsätzlich nur einen einzigen Zugstrang aufweisen, bevorzugt wird jedoch ein Zugmittel, das mehrere Zugstränge umfasst, insbesondere zwei Zugstränge, die parallel nebeneinander angeordnet und mit gleichen Geschwindigkeiten in die gleiche Förderrichtung angetrieben werden. Die mehreren Tragglieder sind hintereinander angeordnet und je mit dem Zugmittel verbunden. Die Mitnehmerelemente sind vorzugsweise vollkommen steif mit den Traggliedern verbunden, beispielsweise verschweißt, und ragen für einen rechenartigen Eingriff in das Schüttgut zumindest einseitig über die Tragglieder hinaus. Die Verbindung zwischen den Traggliedern und den Mitnehmerelementen ist zumindest so steif, dass ein von dem rechenartigen Eingriff erzeugtes Drehmoment von den Traggliedern aufgenommen wird. Auch die Verbindung zwischen den Traggliedern und dem Zugmittel ist für eine Übertragung dieses Drehmoment ausreichend steif.

Nach der Erfindung ragt wenigstens eines der Mitnehmerelemente von dem Tragglied, mit dem es verbunden ist, in Förderrichtung mit einer Neigung vor, vorzugsweise so, dass eine Scherkante des Mitnehmerelements ein vorauslaufendes Ende bildet. Vorzugsweise gilt dies für jedes der Mitnehmerelemente oder zumindest für mehrere der Mitnehmerelemente. Es soll jedoch nicht ausgeschlossen sein, dass eines oder mehrere der Mitnehmerelemente in herkömmlicher Weise senkrecht zur Förderrichtung oder gar unter Ausbildung einer nachlaufenden Scherkante in die Gegenrichtung geneigt angeordnet sind. Durch die erfindungsgemäß in Förderrichtung geneigte Anordnung wird der Reibungskoeffizient zwischen dem wenigstens einen, geneigt angeordneten Mitnehmerelement und dem Schüttgut verringert. Das Schüttgut wird von dem Mitnehmerelement angehoben und kann daher leichter transportiert werden. Die Neigung beträgt in Bezug auf eine Senkrechte zu der Förderrichtung vorzugsweise zwischen 20 und 60°, bevorzugter zwischen 20 und 40°.

Obgleich es für die Wirkung als Rechen grundsätzlich ausreicht, wenn das wenigstens eine Mitnehmerelement nur über eine Seite seines Tragglieds hinausragt, wird bevorzugt, wenn es auch über die von der Scherkante abgewandte Seite des Tragglieds hinausragt.

Nach einem weiteren Aspekt der Erfindung weist wenigstens eines der Tragglieder der Fördereinrichtung, wie die Erfindung sie betrifft, an einer der Scherkante des Mitnehmerelements zugewandten Seite seines Tragglieds einen ersten Abschnitt mit einer ersten Länge auf, die größer ist als eine Länge eines weiteren Abschnitts des gleichen Mitnehmerelements, mit dem es über die von der Scherkante abgewandte Seite des Tragglieds hinausragt. Auf diese Weise bildet das Mitnehmerelement an einer von der Scherkante abgewandten Seite des Tragglieds einen längeren wirksamen Hebelarm als an einer der Scherkante zugewandten Seite. Insbesondere bei einer hohen Auslastung der Fördereinrichtung wird das Schüttgut auch über die Tragglieder gefördert. Aufgrund der erfindungsgemäß gebildeten Hebelarme wird das von dem Mitnehmerelement auf das Tragglied ausgeübte Drehmoment verringert. Ein Hebelarmverhältnis wird vorzugsweise so gewählt, dass bei hoher Auslastung möglichst ein Drehmomentenausgleich stattfindet, d.h. insgesamt ein möglichst geringes Gesamtmoment von dem Mitnehmerelement auf das Tragglied wirkt.

Wie bereits im Falle des ersten Aspekts der Erfindung, der vorwärts geneigten Anordnung, werden auch die erfindungsgemäß ungleichen Hebelarme nicht nur bei einem einzigen, sondern vorzugsweise bei mehreren und besonders bevorzugt bei allen Mitnehmerelementen verwirklicht. In einer besonders bevorzugten Ausführungsform werden beide Aspekte der Erfindung bei ein und dem selben Mitnehmerelement verwirklicht. Die gleichzeitige Verminderung des Reibungskoeffizienten und die Einstellung eines Nullmoments oder zumindest die Verringerung des Drehmoments durch die erfindungsgemäß gebildeten Hebelarme bringt für das Zugmittel, aber auch für die einzelnen Rechen und die Verbindungsstellen zum Zugmittel, die größte Belastungsreduzierung und damit auch die größte Verschleißminderung.

Das Hebelarmverhältnis "Länge des weiteren Abschnitts:erste Länge" ist vorzugsweise 1,5:1 oder größer, wobei die Hebelarme auf eine sich für das Tragglied insgesamt einstellende Drehmomentachse bezogen sind. Genauer gesagt ist das Verhältnis auf das Niveau bezogen, das die Drehmomentsache im Mitnehmerelement einnimmt. Diese senkrechte Parallelprojektion wird im folgenden als Wirksache bezeichnet. Besonders bevorzugt wird ein Hebelarmverhältnis von etwa 2:1. Die erste Länge beträgt vorzugsweise zwischen 100 und 300 mm.

In einer bevorzugten Ausführung eines beidseitig überstehenden Mitnehmerelements weist das Mitnehmerelement in dem weiteren Abschnitt, der an der von der Scherkante abgewandten Seite des Tragglieds übersteht, eine Neigungsänderung auf. Bezogen auf eine Senkrechte zur Förderrichtung der Fördereinrichtung ist die Neigung in dem Abschnitt des Mitnehmerelements, der sich von der Scherkante bis zur Wirkachse erstreckt, größer als in dem weiteren Abschnitt, mit dem das Mitnehmerelement über die von der Scherkante abgewandte Seite des Tragglieds hinausragt. Auf diese Weise wird an der von der Scherkante abgewandten Seite des Tragglieds eine Stauwirkung erzielt, die weiter zur Erhöhung des Drehmoments an der von der Scherkante abgewandten Seite beiträgt. Besonders bevorzugt ist die Neigung an der von der Scherkante abgewandten Seite des Tragglieds in einem Abschnitt nahe der Wirkachse größer als in einem von der Wirkachse weiter entfernten Abschnitt des Mitnehmerelements. Vorzugsweise geht die Neigung an dem weiter entfernten Abschnitt nicht über 0°, d.h. nicht über die Senkrechte zur Förderebene des Förderers hinaus.

In bevorzugten Ausführungen wird ein Lasttrum des Zugmittels an wenigstens einer Seite von einer Führungseinrichtung geführt, um die Drehmomente der Tragglieder aufzunehmen. Um die Belastung des Zugmittels weiter zu verringern, sollte das Zugmittel auch an der gegenüberliegenden Seite geführt sein. Bei Ausbildung des Zugmittels als Zugkette werden Drehbewegungen zwischen benachbarten Kettengliedern durch die Führung erschwert und können im Falle einer zweiseitigen engen Gleitführung durch Führungsschienen weitestgehend verhindert werden.

Wird das Zugmittel von einem Gliederförderer mit einer oder mehreren Zugketten gebildet, so ist wenigstens eines der Tragglieder mit einem Schuh verbunden. Die Verbindung ist steif in Bezug auf ein Drehmoment, das bei dem Eingriff auf das Tragglied wirkt. Der Schuh ist in Bezug auf das Drehmoment vorzugsweise steif mit einem Zugglied der Kette oder je einem Zugglied der mehreren Ketten verbunden. Grundsätzlich genügt aber jede Art der Verbindung zwischen dem Zugmittel und dem Schuh, die sicherstellt, dass das Zugmittel den Schuh mitnimmt.

Der Schuh kann vorteilhafterweise von der genannten Führungseinrichtung geführt sein, vorzugsweise gleitgeführt, so dass ein bei dem rechenartigen Eingriff wirkendes Drehmoment von dem Tragglied auf den Schuh und von dem Schuh auf die Führungseinrichtung übertragen wird. Das Zugmittel wird idealerweise nur noch auf Zug beansprucht. Ein gegebenenfalls noch auf das Zugmittel wirkendes Drehmoment ist praktisch vernachlässigbar.

In einer bevorzugten Ausbildung ist der Schuh in Förderrichtung wenigstens so lang, dass er eine Drehbewegung zwischen dem Zugglied, mit dem er in Bezug auf das Drehmoment steif verbunden ist, und einem mit diesem Zugglied drehbar verbundenen Nachbarzugglied an einer Seite des Strangs, die von einem Strangumlenkmittel abgewandt ist, begrenzt.

Die Führung des Zugmittels durch eine Führungseinrichtung, vorzugsweise in Kombination mit einem von der Führungseinrichtung geführten Schuh, der das Drehmoment des Tragglieds vollständig oder zumindest zu einem wesentlichen Teil aufnimmt, wird zwar bevorzugt in Kombination mit dem geneigten Mitnehmerelement und/oder dem beidseitig über das Tragglied hinausragenden Mitnehmerelement verwendet, ist jedoch auch vorteilhaft ohne diese beiden Aspekte der Erfindung bei einer Fördereinrichtung für Schüttgüter mit den Merkmalen a), b) und c) von Anspruch 1.

Die Erfindung wird nachfolgend anhand eines Ausführungsbeispiels erläutert. An dem Ausführungsbeispiel offenbar werdende Merkmale bilden je einzeln und in jeder Kombination die Gegenstände der Ansprüche in bevorzugte Richtungen weiter. Es zeigen:
- Figur 1: einen Flachbunker mit einer erfindungsgemäßen Fördereinrichtung,
- Figur 2: eine Draufsicht auf die Fördereinrichtung der Figur 1,
- Figur 3: ein Detail der Fördereinrichtung der Figur 2 in einer Schnittdarstellung,
- Figur 4: das Detail der Figur 3 in einer Draufsicht und
- Figur 5: das Detail der Figur 2 in einem Querschnitt.

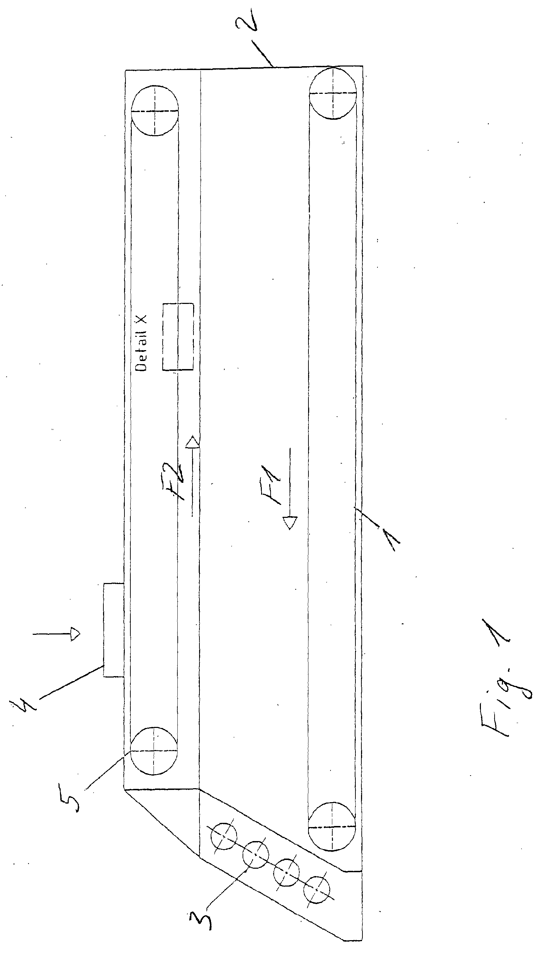

Figur 1 zeigt einen Flachbunker für die Lagerung von großen, sehr flächigen Schüttgütern, beispielsweise Späne für OSB-Platten (Oriented Strand Boards). Der Flachbunker weist eine untere, erste Fördereinrichtung 1 und eine darüber angeordnete obere, zweite Fördereinrichtung 5 auf. Die erste Fördereinrichtung 1 wird vorzugsweise von einem sehr breiten Förderband gebildet und daher im Folgenden beispielhaft als Förderband 1 bezeichnet. Die zweite Fördereinrichtung 5 wird im Folgenden aufgrund ihrer Wirkungsweise als Ziehförderer 5 bezeichnet. Das Förderband 1 ist an einem Boden und der Ziehförderer 5 ist unter einem Dach eines Bunkerbehälters 2 angeordnet. An einer Seite des Behälters 2 ist eine Austragseinrichtung 3 vorgesehen, die im Ausführungsbeispiel von einer Stachelwalzeneinheit mit mehreren übereinander angeordneten Stachelwalzen 3 gebildet wird. Die Förderrichtungen F1 und F2 des Förderbands 1 und des Ziehförderers 5 sind einander entgegengesetzt, so dass in Verbindung mit der Austragseinrichtung 3 in dem Bunkerbehälter 2 beim Austragen stets ein Schüttgutberg mit gleichmäßiger Schüttung erhalten wird.

Zum Befüllen des Bunkerbehälters 2 wird das Schüttgut durch einen Einfüllschacht 4 von oben in den Bunkerbehälter 2 und auf das Förderband 1 eingebracht. Das Förderband 1 steht dabei vorzugsweise still, kann aber grundsätzlich auch das lose darauf liegende Schüttgut in Richtung der Austragseinrichtung 3 fördern, die bei der Befüllung des Bunkerbehälters 2 allerdings noch nicht läuft. Das Schüttgut steigt an dieser Behälterwand allmählich an bis der sich bildende Schüttgutkegel die Höhe des Ziehförderers 5 erreicht hat. Der Ziehförderer 5 ist ein angetriebener, endlos um Umlenkelemente umlaufender Kettenförderer, dessen Untertrum bei einem Eingriff in das Schüttgut das Lasttrum bildet. Sobald der Schüttgutkegel die für den Eingriff des Ziehförderers 5 erforderliche Höhe erreicht hat, zieht der Ziehförderer 5 das Schüttgut an der Spitze des Schüttgutkegels in Förderrichtung F2 nach hinten, bis das mitgenommene Schüttgut das aufgrund der Wirkung des Ziehförderers 5 allmählich nach hinten wandernde Ende des Schüttgutkegels erreicht hat und dort den Schüttgutkegel hinunter fällt. Mit dem Ziehförderer 5 kann somit der gesamte Bunkerbehälter 2 zwischen dem Förderband 1 und dem Ziehförderer 5 gefüllt werden. Mit dem Ziehförderer 5 wird eine homogene und gleichförmige Schüttgutverteilung vor der Austragseinrichtung 3 erzeugt.

Soll das Schüttgut aus dem Bunkerbehälter 2 ausgetragen werden, werden die Stachelwalzen der Austragseinrichtung 3 in Gang gesetzt und gleichzeitig das Förderband 1 gestartet. Das Schüttgut wird in die Stacheln der Stachelwalzen gedrückt und ausgetragen. Es fällt in einen Ausfallschacht und wird durch nachfolgende Organe entweder einem Trockner oder, falls es bereits trocken ist, einer Presse zugeführt. Flachbunker haben sich bewährt, da eine Reihe von Schüttgütern, insbesondere Späne, sehr stark zu einer Brückenbildung neigen und Hochbunker daher ungeeignet wären. Zum anderen wird das Schüttgut nicht zuletzt wegen des Ziehförderers 5 relativ schonend behandelt.

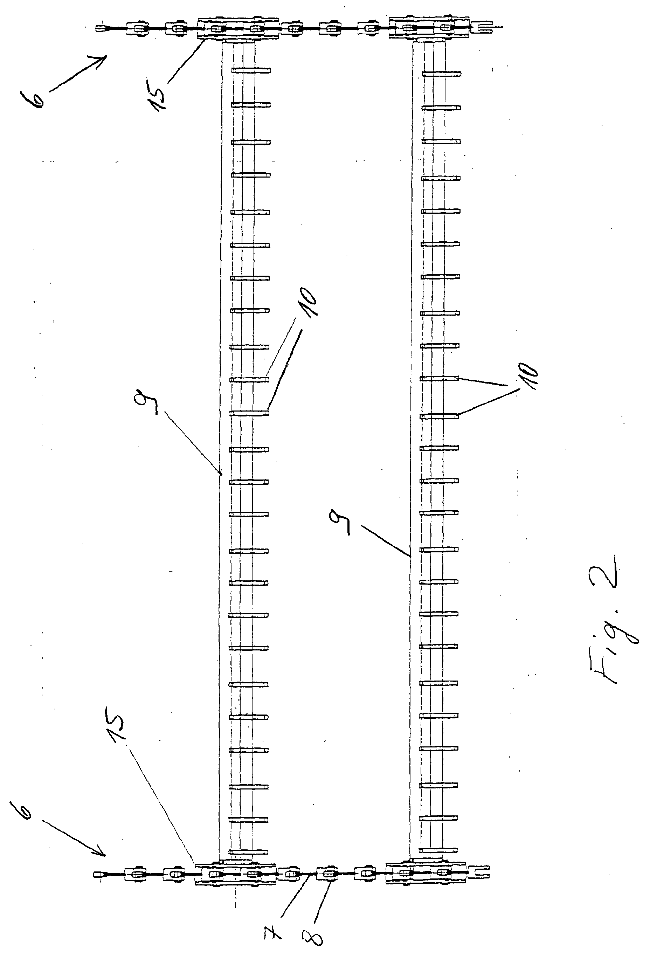

Figur 2 zeigt einen Teil des Ziehförderers 5 in einer Draufsicht. Der Ziehförderer 5 weist als Zugmittel zwei beabstandet parallel nebeneinander endlos umlaufende Kettenstränge 6 auf, die motorisch angetrieben werden. Die Kettenstränge 6 bilden ein Zugmittel für eine Vielzahl von Rechen, die quer zu den Kettensträngen 6 weisend in regelmäßigen Abständen hintereinander zwischen den Kettensträngen 6 angeordnet und mit je einem Kettenglied der Kettenstränge 6 vollkommen starr verbunden sind. Die Rechen werden je von einem stangenförmigen Tragglied 9 mit je einer Mehrzahl von stabförmigen Mitnehmerelementen 10 gebildet. Jedes der Tragglieder wird von einem hohlen Mehrflach, im Ausführungsbeispiel einem Vierkantrohr, gebildet. Jedes der Mitnehmerelemente 10 weist einen flachen Rechteckquerschnitt auf. Die Mitnehmerelemente 10 sind vollkommen starr mit den Traggliedern 9 verbunden. Im Ausführungsbeispiel sind sie auf die Tragglieder 9 geschweißt. Dementsprechend sind die Tragglieder 9 und die Mitnehmerelemente 10 aus miteinander verschweißbaren metallischen Materialien, beispielsweise Stahl, gefertigt. Die Tragglieder 9 sind an ihren beiden Enden je mittels einem Schuh 15 mit einem der beiden Kettenstränge 6 verbunden.

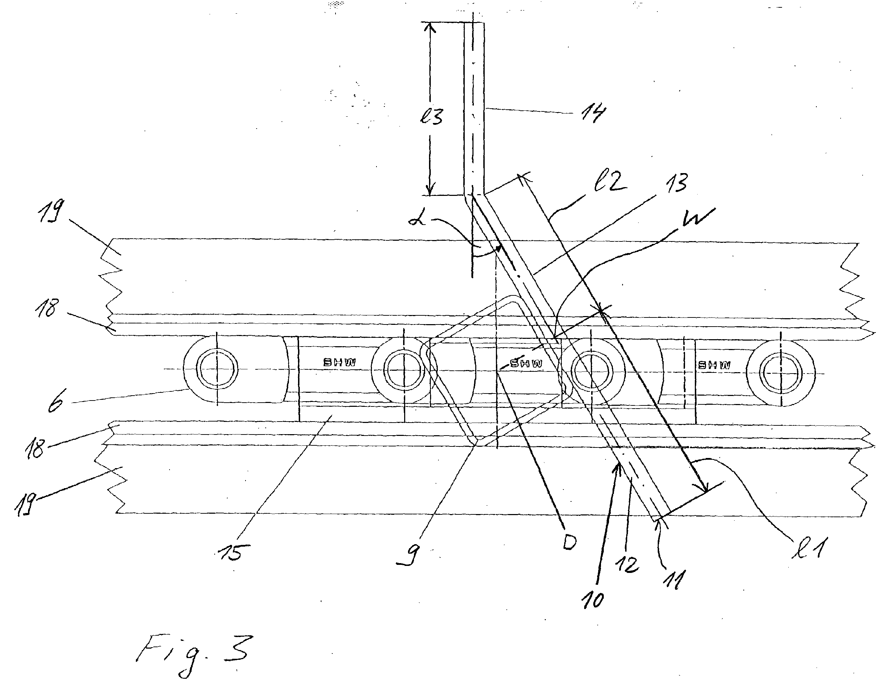

Figur 3 zeigt stellvertretend für die anderen ein einzelnes der Tragglieder 9 in einem Querschnitt, eines der Mitnehmerelemente 10 in dem zugehörigen Längsschnitt und den dahinter befindlichen Kettenstrang 6 und insbesondere den Schuh 15 dieses Tragglieds 9 in der zugehörigen Seitenansicht. Da die Ausbildung und Anordnung bei allen Traggliedern 9, Mitnehmerelementen 10 und Schuhen 15 jeweils gleich sind, gelten die nachfolgend am Einzelbeispiel gemachten Ausführungen stellvertretend für alle.

Das Mitnehmerelement 10 ist auf einer dem Schüttgut abgewandten Flachseite des Tragglieds 9 flach aufliegend an dem Tragglied 9 befestigt. Es ragt sowohl an einer Seite, an der es bei dem rechenartigen Eingriff in das Schüttgut eine Scherkante 11 bildet, als auch an einer von der Scherkante 11 abgewandten Seite über das Tragglied 9 hinaus. Das Mitnehmerelement 10 weist von dem Tragglied 9 aus mit einer Neigung zur Förderrichtung F2. Infolge der Neigung bildet die Scherkante 11 bei der Förderung ein vorauslaufendes Ende des Mitnehmerelements 10. Im Ausführungsbeispiel bildet das Mitnehmerelement 10 von der Scherkante 11 bis über das Tragglied 9 hinaus eine einfache Schräge mit einem konstanten Neigungswinkel α, der 30° bezogen auf eine Senkrechte auf die Förderrichtung F2 und eine durch die Kettenstränge 6 aufgespannte Ebene beträgt.

An der von der Scherkante 11 abgewandten Seite des Tragglieds 9 weist das Mitnehmerelement 10 einen Knick auf und verläuft von dem Knick bis zu einem hinteren Ende ohne Neigung in einem Winkel von 90° zur Förderrichtung F2 einfach gerade.

An der der Scherkante 11 zugewandten Seite des Tragglieds 9 ragt das Mitnehmerelement 10 weniger weit über das Tragglied 9 hinaus als an der von der Scherkante 11 abgewandten Seite. Hierdurch werden bei hohem Auslastungsgrad des Ziehförderers 5 besonders günstige Drehmomentverhältnisse erhalten. Gegenüber einem an beiden Seiten gleich weit vorragenden Mitnehmerelement wird das Drehmoment, das bei dem Eingriff auf das Tragglied 9 wirkt und letztlich von den Kettensträngen 6 aufzunehmen ist, reduziert. In Figur 3 ist mit D die Achse des insgesamt auf das Tragglied 9 wirkenden Drehmoments eingetragen. Als Wirkachse W wird die senkrechte Parallelprojektion der Drehmomentachse D auf das Mitnehmerelement 10 bezeichnet. Bezogen auf die Wirkachse W weist ein vorderer, erster Abschnitt 12 des Mitnehmerelements 10, der sich von der Scherkante 11 bis zu der Wirkachse W erstreckt, eine Länge 11 auf. Ein sich daran anschließender zweiter Abschnitt 13, der sich von der Wirkachse W bis zu dem Knick erstreckt, weist eine Länge 12 auf. Ein dritter Abschnitt 14, der sich von dem Knick bis zu einem hinteren Ende des Mitnehmerelements 10 erstreckt, weist eine Länge 13 auf. Die aus den Längen 12 und 13 gebildete Summe ist etwa doppelt so groß wie die Länge 11. Der Geometrie des Ausführungsbeispiels genauer entsprechend steht das Mitnehmerelement 10 zu der Scherkante 11 hin etwa halb so weit über das Tragglied 9 hinaus wie an der von der Scherkante 11 abgewandten Seite. In ebenfalls grober Abschätzung sind die Längen 11, 12 und 13 in etwa gleich. Wird das Schüttgut bei dem rechenartigen Eingriff auf dem Mitnehmerelement 10 über die Wirkachse W hinaus hochgeschoben, was zumindest bei höheren Auslastungsgraden, d.h. tieferem Eingriff, des Ziehförderers 5 der Fall ist, so bildet das erfindungsgemäß rückwärtig lange Mitnehmerelement 10 über dem Tragglied 9 einen im Vergleich zum Stand der Technik längeren Hebelarm für die dort auftretenden Kräfte als bei bekannten Ziehförderern. Der Effekt wird noch durch die abgeknickte Form, durch die eine Stauwirkung erzielt wird, verstärkt. Die Stauwirkung kommt bei flächigen, gestreckten Schüttgutkörpern, wie Späne sie darstellen, aufgrund gegenseitiger Verhakung solcher Schüttgutkörper besonders vorteilhaft zum Tragen.

Über die günstigen Hebelverhältnisse hinaus wird durch die geneigte Anordnung der Reibungswiderstand zwischen dem Mitnehmerelement 10 und dem Schüttgut verringert. Das Schüttgut kann von der Scherkante 11 aus leichter auf dem Mitnehmerelement 10 hochgeschoben werden als bei einer senkrechten Ausrichtung der Mitnehmerelemente. Das Schüttgut wird infolge der Neigung des Mitnehmerelements 10 regelrecht angehoben. Der geringere Reibungswiderstand trägt nicht nur unmittelbar zur Verschleißminderung bei, sondern auch zur Verringerung des Gesamtdrehmoments. Es ergänzen sich die Merkmale der Neigung und des großen Überstands an der von der Scherkante 11 abgewandten Seite in synergistischer Weise, da durch die Reduzierung des Reibungswiderstands das Schüttgut sich auf dem Mitnehmerelement 10 weiter zum hinteren, d.h. oberen Ende des Mitnehmerelements 10 schiebt als bei den Ziehförderern nach dem Stand der Technik.

Um die Kettenstränge 6 über die bereits erreichte Drehmomentenreduzierung hinaus noch weiter zu entlasten, wird das Drehmoment von dem Tragglied 9 auf den Schuh 15 übertragen, der seinerseits zwischen einem Paar von Führungsschienen 18 gleitgeführt wird. die Drehmomente der Tragglieder 9 werden somit von den Führungsschienen 18 und deren Halteeinrichtung 19 aufgenommen. Auf die Kettenstränge 6 werden allenfalls noch praktisch unbedeutende Drehmomente übertragen, d.h. die Kettenstränge 6 werden zumindest im Wesentlichen nur noch auf Zug beansprucht. Dieser Vorteil kommt im besonderen Maße bei geringeren Füllungsgraden zum Tragen, da in solchen Fällen der Vorteil des langen Hebelarms an der von der Scherkante 11 abgewandten Seite des Mitnehmerelements 10 nicht oder zumindest nicht so stark wie bei hohen Auslastungsgraden zum Drehmomentenausgleich führt. Die Führungsschienen 18 werden bevorzugt von Manganschienen gebildet.

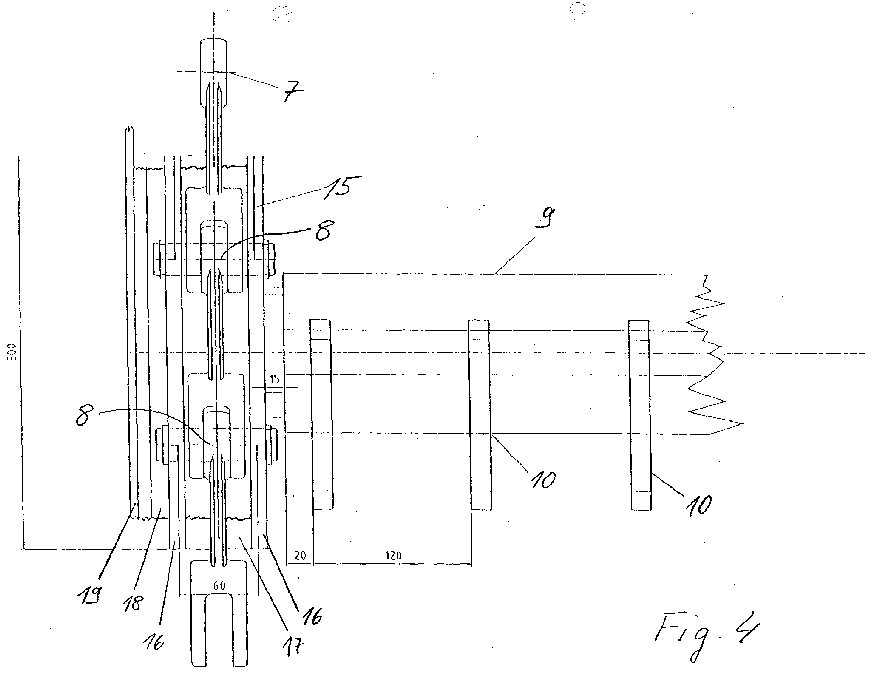

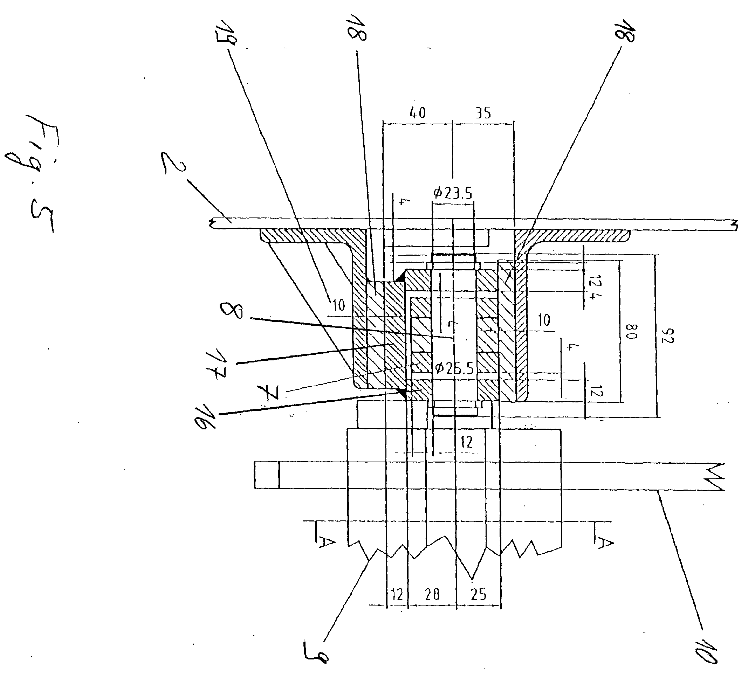

Die Ausbildung und das Zusammenwirken des Schuhs 15 mit den Führungsschienen 18 ist am besten aus der Zusammenschau der Figuren 3 bis 5 erkennbar, wobei in der Draufsicht der Figur 4 die obere Führungsschiene 18 abgenommen ist.

Der Schuh 15 weist etwa die doppelte Länge eines einzelnen der Kettenglieder 7 der Kettenstränge 6 auf. Er ist mit einem einzelnen Kettenglied 7 durch Befestigung an beiden Drehgelenken 8 dieses Kettenglieds 7 steif verbunden. Er überragt dieses Kettenglied 7 zu dem vorlaufenden und dem nachlaufenden Kettenglied 7 gleichermaßen, d.h. er überdeckt das vorlaufende und das nachlaufende Kettenglied 7 je um etwa die halbe Kettengliedlänge. Bei einer üblichen Kettengliedlänge von beispielsweise 150 mm ist der Schuh 15 somit etwa 300 mm lang. Der Schuh kann grundsätzlich auch mehr als die doppelte Kettengliedlänge aufweisen und über mehr als drei Kettenglieder wirken, wobei allerdings sicherzustellen ist, dass die Kette beim Übergang vom Umlenkmittel in die Gerade die mit dem Schuh verklemmt. Das Tragglied 9 ist zwischen den beiden Drehgelenken 8 mit dem Schuh 15 steif verbunden.

Im Querschnitt bildet der Schuh 15 einen zweifachen Winkel bzw. ein U mit zwei Seitenschenkeln 16 und einem Bodenschenkel 17, der mit den beiden Seitenschenkeln 16 steif verbunden ist, beispielsweise mittels je einer Schweißverbindung. Der Bodenschenkel 16 bietet eine gegenüber den Seitenschenkeln 17 große Führungsfläche und liegt auf der unteren Führungsschiene 18 auf. Zu der oberen Führungsschiene 18 hat der Schuh ein wenig Abstand, vorzugsweise 3 bis 4 mm. Die U-Form gestattet eine einfache Montage auf dem Kettenstrang 6 und trägt darüber hinaus in Verbindung mit der Führung des Schuhs 15 zur Vergleichmäßigung der Kraftverteilung im Schuh 15 bei. Der Schuh 15 wird an dem Kettenglied 15 natürlich so befestigt, dass die Drehbewegung zwischen benachbarten Kettengliedern 7 bei der Umlenkung des Kettenstrangs 6 nicht behindert wird. Wegen der im Ausführungsbeispiel gewählten Form der Laschen des Kettenglieds 7 verbleibt zwischen dem Kettenglied 7 und dem Bodenschenkel 17 ein geringer Abstand, damit eine für die Umlenkung erforderliche Drehbewegung durch den Schuh 15 nicht behindert wird. Der Bodenschenkel 17 ist zwischen den Drehgelenken 8 des betreffenden Kettenglieds 7 mit einer Durchbrechung versehen, durch die möglicherweise zwischen dem Kettenglied 7 und dem Schuh 15 eingeklemmte Schüttkörper von den Umlenkmitteln ausgedrückt werden können. Der Schuh 15 ist an der Unterseite des Bodenschenkels 10 und an den Oberseiten der beiden Seitenschenkel 16 zwischen den beiden Führungsschienen 18 eingefasst, so dass von dem Schuh 15 keine oder zumindest keine praktisch relevanten Kippmomente auf die beiden benachbarten Kettenglieder 7 wirken können. Die Halteeinrichtung 19 für die beiden Führungsschienen 18 ist an der Seitenwand des Bunkerbehälters 2 befestigt.

### Bezugszeichen:

- 1: erste Fördereinrichtung, Förderband
- 2: Behälter
- 3: Staueinrichtung, Austragseinrichtung, Stachelwalzeneinheit
- 4: Einfüllschacht
- 5: Fördereinrichtung, Ziehförderer, zweite Fördereinrichtung
- 6: Zugmittel, Kettenstränge
- 7: Zugmittelglied
- 8: Drehgelenk
- 9: Tragglied
- 10: Mitnehmerelement
- 11: Scherkante
- 12: erster Abschnitt,
- 13: zweiter Abschnitt
- 14: dritter Abschnitt
- 15: Schuh
- 16: Seitenschenkel
- 17: Bodenschenkel
- 18: Führungsschiene
- 19: Halteeinrichtung
- F1, F2: Förderrichtung
- D: Drehmomentachse
- W: Wirkachse
- 11: erste Länge
- 12: zweite Länge
- 13: dritte Länge
- α: Neigung

## Patentansprüche

1. Fördereinrichtung für Schüttgut, umfassend:
a) ein in eine Förderrichtung (F2) antreibbares Zugmittel (6),
b) mit dem Zugmittel (6) verbundene, in Förderrichtung (2) hintereinander angeordnete Tragglieder (9),
b) und Mitnehmerelemente (10), die mit den Traggliedern (9) verbunden sind und für einen rechenartigen Eingriff in das Schüttgut über die Tragglieder (9) hinausragen,
**dadurch gekennzeichnet, dass**
d) wenigstens eines der Mitnehmerelemente (10) von dem Tragglied (9), mit dem es verbunden ist, in Förderrichtung (F2) zu einer Scherkante (11) des Mitnehmerelements (10) mit einer Neigung (α) vorragt.

2. Fördereinrichtung nach Anspruch 1, **dadurch gekennzeichnet, dass** die auf eine Senkrechte zu der Förderrichtung (F2) bezogene Neigung (α) zwischen 20 und 60° beträgt.

3. Fördereinrichtung nach einem der vorhergehenden Ansprüche, **dadurch gekennzeichnet, dass** das wenigstens eine Mitnehmerelement (10) auch an einer von der Scherkante (11) abgewandten Seite des Tragglieds (9) über das Tragglied (9) hinausragt.

4. Fördereinrichtung für Schüttgut, umfassend:
a) ein in eine Förderrichtung (F2) antreibbares Zugmittel (6),
b) mit dem Zugmittel (6) verbundene, in Förderrichtung (F2) hintereinander angeordnete Tragglieder (9)
c) und Mitnehmerelemente (10), die mit den Traggliedern (6) verbunden sind und an einer Seite, an der sie Scherkanten (11) für das Schüttgut bilden, für einen rechenartigen Eingriff in das Schüttgut über die Tragglieder (9) hinausragen,
d) wobei wenigstens eines der Mitnehmerelemente zur Reduzierung eines bei einer Schüttgutförderung auftretenden Drehmoments auch an einer von seiner Scherkante (11) abgewandten Seite über das Tragglied (9), mit dem es verbunden ist, hinausragt, so dass es einen ersten Abschnitt (12) mit einer von der Scherkante (11) bis zu einer Wirkachse (W) des Drehmoments gemessenen Länge (11) und einen weiteren Abschnitt (13, 14) mit einer von der Wirkachse (W) bis zu einem von der Scherkante (11) abgewandten Ende gemessenen Länge (12, 13) aufweist,
**dadurch gekennzeichnet, dass**
e) die Länge (11) des ersten Abschnitts (12) des wenigstens einen Mitnehmerelements (10) kleiner ist als die Länge (12, 13) des weiteren Abschnitts (13, 14).

5. Fördereinrichtung nach dem vorhergehenden Anspruch, **dadurch gekennzeichnet, dass** das wenigstens eine Mitnehmerelement (10) gemäß Anspruch 1 oder 2 ausgebildet ist.

6. Fördereinrichtung nach einem der zwei vorhergehenden Ansprüche, **dadurch gekennzeichnet, dass** die Länge (12, 13) des weiteren Abschnitts (13, 14) wenigstens das 1.5-fache der Länge (11) des ersten Abschnitts (12) beträgt.

7. Fördereinrichtung nach dem vorhergehenden Anspruch, **dadurch gekennzeichnet, dass** das wenigstens eine Mitnehmerelement (10) in einem ersten Abschnitt (12), der sich von einer Wirkachse (W) eines bei einer Schüttgutförderung wirkenden Drehmoments bis zu der Scherkante (11) erstreckt, eine größere Neigung aufweist als in einem Abschnitt (14), der sich von der Wirkachse (W) bis zu einem von der Scherkante (11) abgewandten Ende des wenigstens einen Mitnehmerelements (10) erstreckt.

8. Fördereinrichtung nach dem vorhergehenden Anspruch, **dadurch gekennzeichnet, dass** eine Verringerung der Neigung (α) in einem Abstand (12) von der Wirkachse (W), vorzugsweise in einem Abstand von dem Tragglied (9), stattfindet.

9. Fördereinrichtung nach einem der vorhergehenden Ansprüche, **dadurch gekennzeichnet, dass** ein Lasttrum des Zugmittels (6) an wenigstens einer Seite von einer Führungseinrichtung (18, 19) geführt wird, um von den Traggliedern (9) auf das Lasttrum wirkende Drehmomente aufzunehmen.

10. Fördereinrichtung nach dem vorhergehenden Anspruch, **dadurch gekennzeichnet, dass** wenigstens eine Führungsschiene (18) die Führungseinrichtung (18, 19) bildet oder mitbildet.

11. Fördereinrichtung nach einem der zwei vorhergehenden Ansprüche, **dadurch gekennzeichnet, dass** das Lasttrum zur Abstützung gegen die Drehmomente an zwei gegenüberliegenden Seiten von der Führungseinrichtung (18, 19) geführt wird.

12. Fördereinrichtung nach einem der drei vorhergehenden Ansprüche, **dadurch gekennzeichnet, dass**
ein Gliederförderer mit wenigstens einem Strang von drehbar miteinander verbundenen Zuggliedern (7) das Zugmittel (6) bildet,
wenigstens ein Tragglied (9) in Bezug auf ein bei einer Schüttgutförderung wirkendes Drehmoment steif mit einem an dem Strang befestigten Schuh (15) verbunden ist,
und die Führungseinrichtung (18, 19) den Schuh (15) führt.

13. Fördereinrichtung nach einem der vorhergehenden Ansprüche, **dadurch gekennzeichnet, dass**
ein Gliederförderer mit wenigstens einem Strang von drehbar miteinander verbundenen Zuggliedern (7) das Zugmittel (6) bildet,
wenigstens ein Tragglied (9) in Bezug auf ein bei einer Schüttgutförderung auf das Tragglied (9) wirkendes Drehmoment steif mit einem Schuh (15) verbunden ist,
und der Schuh (15) in Bezug auf das Drehmoment steif mit einem Zugglied (7) des Strangs verbunden ist und eine Drehbewegung zwischen dem Zugglied (7) und einem benachbarten Zugglied (7) an einer Seite des Strangs, die von einem Strangumlenkmittel abgewandt ist, begrenzt.

14. Fördereinrichtung nach dem vorhergehenden Anspruch, **dadurch gekennzeichnet, dass** der Schuh (15) einen Winkel mit wenigstens einem Seitenschenkel (16) und einem Bodenschenkel (17) bildet und der Bodenschenkel (17) das Zugmittel (6) an der von dem Umlenkelement abgewandten Seite stützt.

15. Schüttgutbunker, insbesondere Flachbunker, umfassend:
a) einen Behälter (2),
b) eine in dem Behälter (2) angeordnete erste Fördereinrichtung (1) für eine Förderung eines lose aufliegenden Schüttguts in eine erste Förderrichtung (F1),
c) eine Staueinrichtung (3), zu der die erste Fördereinrichtung (1) das Schüttgut fördert, so dass sich das Schüttgut an der Staueinrichtung (3) hochstaut,
d) und eine zweite Fördereinrichtung (5), die sich über der ersten Fördereinrichtung (1) bis zu der Staueinrichtung (3) erstreckt und für einen rechenartigen Eingriff in das sich an der Staueinrichtung (3) hochstauende Schüttgut in eine von der Staueinrichtung (3) weg weisende, zweite Förderrichtung (F2) antreibbar ist,
**dadurch gekennzeichnet, dass**
e) die zweite Fördereinrichtung (5) eine Fördereinrichtung nach einem der vorhergehenden Ansprüche ist.
